# EUROPEAN PATENT APPLICATION

(11) **EP 1 868 392 A1**
(43) Date of publication of application: **19.12.2007**
(21) Application number: 06761482.6
(22) Date of filing: 19.07.2006
(51) Int. Cl.: H04Q 7/00

(54) **A METHOD FOR REALIZING ALTERNATION OF DUAL SERVICES IN TANDEM OFFICE**

(30) Priority: 02.11.2005 CN 200510117330
(71) Applicant: Huawei Technologies Co., Ltd., Longgang District, Shenzhen Guangdong 518129 (CN)
(72) Inventor: LI, Shijun, Guangdong 518129 (CN)
(74) Representative: Texier, Christian
(86) International application number: PCT/CN2006/001747
(87) International publication number: WO 2007/051382

(57) **Abstract**

The present invention is a method for realizing alternation of dual services in tandem office, the method is applied to the tandem office which exchanges by using internet protocol IP /asynchronous transfer mode ATM. The present method includes: tandem office media gateway reports media type change message to tandem mobile switching center server when it detects change of media type of band information packet of the current call, wherein the media type change message carries the changed media type information; the tandem mobile switching center server judges whether a bearer type needs to be modified or not based on the reported media type; if so, it transmits modify indication of the bearer type to the tandem office media gateway; the tandem media gateway modifies itself bearer type when it receives the modify indication of the bearer type and transmits the changed band information packet. The method can reasonably utilize dynamic band of tandem office and ensure normal execution of the changed service when there is alternation of dual services.

## Description

### Field of the Invention

The present invention relates to communication field, and particularly to a method for implementing dual-service alternation by a tandem office.

### Background of the Invention

For a tandem office with Time Division Multiplex (TDM) switching, it is enough to assign one 64K circuit to the current call both for single service (voice, fax and data) and dual-service (voice/fax alternation, voice/data alternation, or multimedia/voice alternation). If dual-service alternation occurs, only modification of a wireless channel in an end office is required without modification of a bearer of a tandem office since it is insignificant to concern about the utilization ratio of the bandwidth of a TDM circuit once the TDM circuit is assigned. However, for a tandem office with Internet Protocol (IP) or Asynchronous Transfer Mode (ATM) switching, when dual-service alternation occurs, bearer type of the tandem office needs to be modified to implement the service alternation so as to utilize bandwidth appropriately.

For a tandem office, establishment of bearer type depends on bearer capability at the time of establishing a call. For example, for a voice call, code and decode (CODEC) with high compression ratio, such as G.729, may be employed by a tandem office with IP or ATM switching so as to improve the utilization ratio of the bandwidth when establishing a bearer. If a subscriber wants to change the voice call to a fax/data/multimedia call during the call, bearer type of an end office may be modified in the end office by a standard MODIFY message. However, this message can not be transferred between offices. Therefore, G..729 can not be changed into G.711 to transfer fax/data/multimedia information.

In the prior art, there is no appropriate processing method for implementing dual-service alternation of traffic passing through a tandem office successfully.

### Summary of the Invention

The present invention provides a method for implementing dual-service alternation by a tandem office to solve the problem in the prior art that system resources are wasted or service alternation fails because the bearer type is unable to be modified automatically when the service type of traffic passing through the tandem office is changed.

The method of the present invention is applied to a tandem office with IP/ATM switching, the method including:

reporting, by a tandem media gateway, a media type change message containing information of changed media type to a tandem switch center server, when the tandem media gateway detects that media type of an inband information packet of a current call is changed;

determining, by the tandem switch center server, whether modification of bearer type is required based on the reported media type; if yes, sending a bearer type modification indication to the tandem media gateway;

modifying, by the tandem media gateway, bearer type of the tandem media gateway and transmitting the inband information packet of a changed service, when receiving the bearer type modification indication.

According to the method of the present invention, the following processes are performed when service change is initiated:

sending, by a calling terminal and a called terminal, service modification messages to respective end offices of the calling terminal and the called terminal via respective access networks to request changing of service type;

selecting, by the end office of the calling terminal, a corresponding bearer type based on the changed service type, and modifying a media bearer termination between a calling media gateway and a calling access network, and a media bearer termination between the calling media gateway and a tandem office media gateway; selecting, by the end office of the called terminal, a corresponding bearer type based on the changed service type, and modifying a media bearer termination between a called media gateway and a called access network, and a media bearer termination between the called media gateway and a tandem office media gateway;

modifying, by the tandem media gateway, a media bearer termination according to the bearer type modification indication sent from the tandem switch center server.

According to the method of the present invention, the transmitting the inband information packet of the changed service includes: transmitting the inband information packet of the changed service between the calling terminal and the called terminal by using the modified media bearer termination via the access network of the calling terminal, the calling media gateway, the tandem media gateway connected with the calling media gateway, the tandem media gateway connected with the called media gateway, the called media gateway and the access network of the called terminal.

The service modification messages sent to the end offices by the calling terminal and the called terminal via the respective access networks are MODIFY messages.

According to the above method of the present invention, when the tandem switch center server receives the media type change message reported by the tandem media gateway, the tandem switch center server obtains a corresponding bearer type according to the changed media type. If the obtained bearer type is different from a bearer type currently used by the tandem media gateway, the tandem media gateway is instructed to modify the bearer type of the tandem media gateway.

According to the above method of the present invention, a table of corresponding relationship between media types and bearer types is previously stored in the tandem switch center server. The tandem switch center server obtains the media type of the changed service from the media type change message reported by the tandem media gateway, and queries the table to obtain the bearer type corresponding to the media type of the changed service.

According to the above method of the present invention, after the tandem media gateway reports the media type change message, if the tandem media gateway does not receive the bearer type modification indication from the tandem switch center server, the tandem media gateway will still use an original bearer type of the current call to carry the inband information packet of the changed service.

With the method of the present invention, the tandem media gateway detects in real time whether the media type of the inband information packet is changed or not. If yes, which represents that the service is changed, the tandem media gateway reports the change to the tandem switch center server, and the tandem switch center server decides whether to modify the bearer type of the tandem office. When the tandem switch center server decides to modify the bearer type of the tandem office, the tandem switch center server instructs the tandem media gateway to modify the bearer type based on the changed service type indication, so that bandwidth of the tandem office may be utilized appropriately and successful implementation of the changed service may be ensured when dual-service alternation occurs.

### Brief Description of the Drawings

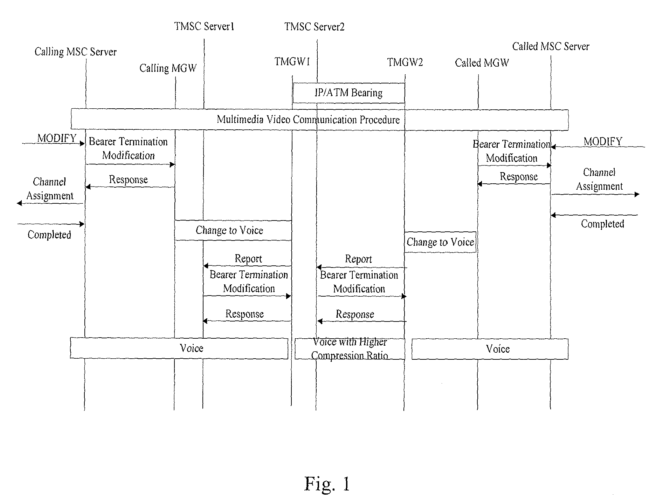

Figure 1 is a flowchart illustrating performing multimedia service and then voice service by a tandem office.

### Detailed Description of the Embodiments

Figure 1 illustrates a procedure of alternation between an established multimedia call and a voice call as required by a subscriber. The procedure includes the following processes.

A calling party sends a service modification message MODIFY to a calling mobile switch center server (calling MSC Server) via an access network.

The calling MSC Server selects the corresponding bearer type based on the changed service type, requests a calling media gateway (calling MGW) to modify an access-side media bearer termination, initiates assignment of a wireless channel to the calling party so as to modify the wireless channel. If a calling end office and a tandem office employ IP/ATM bearing, the calling MGW also modifies a trunk-side (i.e., between the calling MGW and the connected tandem media gateway TMGW1) media bearer termination at the same time, so that the calling MGW modifies the media bearer termination transmitting data into the media bearer termination transmitting voice, and may employ CODEC G.729 with high compression ratio to save IP/ATM bandwidth.

Meanwhile, a same procedure is also performed at the called side:

A called party sends a service modification message MODIFY to a called mobile switch center server (called MSC Server) via an access network.

The called MSC Server selects the corresponding bearer type based on the changed service type, requests a called media gateway (called MGW) to modify an access-side media bearer termination, initiates assignment of a wireless channel to the called party so as to modify the wireless channel. If a called end office and a tandem office employ IP/ATM bearing, the called MGW also modifies a trunk-side (i.e., between the called MGW and the connected tandem media gateway TMGW2) media bearer termination, so that the called MGW modifies the media bearer termination transmitting data into the media bearer termination transmitting voice, and may employ CODEC G.729 with high compression ratio to save IP/ATM bandwidth.

Because the tandem office can not obtain a service change notification from out-of-band signaling, the bearer type can not be modified accordingly based on the changed service type. However, when the media bearer terminations of the calling MGW and the called MGW are modified, the media type of inband information packets between the calling MGW and the TMGW1 are changed into voice, and the media type of inband information packets between the called MGW and the TMGW2 is also changed into voice. Thus, the change of the media type of the inband information packets may be detected by the tandem media gateway. When the change of the media type of the inband information packets is detected, which represents that the service has been changed, the tandem media gateway reports the change to the tandem mobile switching center server (TMSC Server) and the TMSC Server initiates modification of the bearer of the tandem media gateway.

In Figure 1, when the TMGW1 detects that the media type of the inband information packets is changed from multimedia information to voice, the TMGW1 reports a media type change message to the tandem switch center server (TMSC Server 1) of the TMGW1. When the TMSC Server 1 decides to modify the bearer type, the TMSC Server 1 sends a bearer modification indication to the TMGW1. When the TMGW1 receives the bearer modification indication, the TMGW1 modifies the corresponding media bearer termination according to the modified bearer type.

Similarly, when the TMGW2 detects the media type of the inband information packets is changed from multimedia information to voice, the TMGW2 reports a media type change message to the tandem switch center server (TMSC Server 2) of the TMGW2. When the TMSC Server 2 decides to modify the bearer type, the TMSC Server 2 sends a bearer modification indication to the TMGW2. When the TMGW2 receives the bearer modification indication, the TMGW2 modifies the corresponding media bearer termination according to the modified bearer type.

Thus, the inband information packets of the changed service are transmitted between the TMGW1 and the TMGW2 with the modified bearer type.

In Figure 1, it is assumed that during the establishment of a multimedia call, both the bearer of the TMGW1 and the bearer of the TMGW2 employ CODEC G.711, and the maximum transmission rate is 64Kbps. When the multimedia information transmission is changed into voice transmission, the inter-office bandwidth resource is wasted if G.711 is stilled employed between the tandem offices to transmit the voice information packets. Therefore, with the above method of the present invention, when the voice information packets are detected by the TMGW1/TMGW2, the TMGW1/TMGW2 reports an indication to the TMSC Server1/TMSC Server2, and then the TMSC Server1/TMSC Server2 instructs the corresponding tandem media gateway TMGW1/TMGW2 to modify the bearer type of the TMGW1/TMGW2 into a CODEC with high compression ratio, such as G.729, so that compression ratio of the voice information packets is improved and bandwidth resource is saved.

In a particular embodiment, the changed media type information may be carried in the media type change message reported by the tandem media gateway. For example, in Figure 1, the changed media type information is "voice", and then the tandem media gateway may indicate in the reported media type change message that the changed media type is "voice". The tandem switch center server may obtain the corresponding bearer type based on the changed media type. If the obtained bearer type is different from the bearer type currently used by the tandem media gateway, the tandem media gateway is instructed to modify the bearer type of the tandem media gateway into the obtained corresponding bearer type. For example, a table of the corresponding relationship between media types and bearer types is previously stored in the tandem switch center server, i.e., the bearer types corresponding to the various media types may be stored in this table, as shown in Table 1:

**Table 1:**

| | |
|---|---|
| Media type | Bearer type |
| Multimedia information | G.711 |
| Voice | CODEC with high compression ratio such as G.729, G.726 |
| ..... | ..... |

When the tandem switch center server determines from the media type change message reported by the tandem media gateway that the media type of the changed service is "voice", the tandem switch center server queries the above corresponding relationship table and finds out that the corresponding bearer type is G.729, and then informs the tandem media gateway to change the bearer type of the tandem media gateway from the original G.711 to G.729. If the bearer type obtained by the tandem switch center server is the same as the media type currently used by the tandem media gateway, the modification of the media type is not required. Accordingly, if the tandem media gateway does not receive the bearer type modification indication from the tandem switch center server after the tandem media gateway reports the media type change message, the tandem media gateway will still use the original bearer type of the current call to carry the inband information packets of the changed service.

If the subscriber wants to change back to a multimedia call, the modification procedure is initiated again, and the above processes are repeated. Therefore, multiple alternations may be made during the process of one call according to the present invention. The service alternation of the present invention includes voice/fax service alternation, voice/data service alternation, voice/multimedia service alternation etc.

Obviously, various changes and modifications may be made by those skilled in the art without departing the spirit and scope of the present invention. Thus, it is intended that the present invention cover these changes and modifications if these changes and modifications fall within the scope of the claims and the equivalence thereof of the present invention.

## Claims

1. A method for implementing dual-service alternation by a tandem office, which is applied in the tandem office employing Internet Protocol or Asynchronous Transmission Mode switching, comprising:
reporting, by a tandem media gateway, a media type change message comprising information of changed media type to a tandem switch center server, when the tandem media gateway detects that media type of an inband information packet of a current call is changed;
determining, by the tandem switch center server, whether modification of bearer type is required based on the reported media type;
sending a bearer type modification indication to the tandem media gateway, if the modification of bearer type is required based on the reported media type;
modifying, by the tandem media gateway, bearer type of the tandem media gateway and transmitting the inband information packets of a changed service, when receiving the bearer type modification indication.

2. The method according to claim 1, comprising the following processes when service change is initiated:
sending, by a calling terminal and a called terminal, service modification messages to respective end offices of the calling terminal and the called terminal via respective access networks to request changing of service type;
selecting, by the end office of the calling terminal, a corresponding bearer type based on the changed service type, and modifying a media bearer termination between a calling media gateway and a calling access network, and a media bearer termination between the calling media gateway and a tandem office; selecting, by the end office of the called terminal, a corresponding bearer type based on the changed service type, and modifying a media bearer termination between a called media gateway and a called access network, and a media bearer termination between the called media gateway and a tandem office;
modifying, by the tandem media gateway, a media bearer termination according to the bearer type modification indication sent from the tandem switch center server.

3. The method according to claim 2, wherein the process of transmitting the inband information packet of the changed service comprises:
transmitting the inband information packet of the changed service between the calling terminal and the called terminal by using the modified media bearer termination via the access network of the calling terminal, the calling media gateway, the tandem media gateway connected with the calling media gateway, the tandem media gateway connected with the called media gateway, the called media gateway and the access network of the called terminal.

4. The method according to claim 2 or 3, wherein the service modification messages sent to the end offices by the calling terminal and the called terminal via the access networks are MODIFY messages.

5. The method according to claim 1, wherein when the tandem switch center server receives the media type change message reported by the tandem media gateway, the tandem switch center server obtains a corresponding bearer type according to the changed media type, if the obtained bearer type is different from a bearer type currently used by the tandem media gateway, the tandem media gateway is instructed to modify the bearer type of the tandem media gateway.

6. The method according to claim 5, wherein a table of corresponding relationship between media types and bearer types is previously stored in the tandem switch center server, the tandem switch center server obtains the media type of the changed service from the media type change message reported by the tandem media gateway, and queries the table to obtain the bearer type corresponding to the media type of the changed service.

7. The method according to claim 1, wherein after the tandem media gateway reports the media type change message, if the tandem media gateway does not receive the bear type modification indication from the tandem switch center server, the tandem media gateway will still use an original bearer type of the current call to carry the inband information packet of the changed service.
